# EUROPÄISCHE PATENTSCHRIFT

(11) **EP 3 127 098 B1**
(45) Veröffentlichungstag und Bekanntmachung des Hinweises auf die Patenterteilung: **12.06.2019**
(21) Anmeldenummer: 15706234.0
(22) Anmeldetag: 24.02.2015
(51) Int. Cl.: G08C 17/02

(54) **MIT EINER DRAHTLOSEN SCHNITTSTELLE AUSGESTATTETE ANZEIGEVORRICHTUNG FÜR DEN BETRIEBSZUSTAND EINER SCHALTVORRICHTUNG**
DISPLAY DEVICE, WHICH IS EQUIPPED WITH A WIRELESS INTERFACE, FOR THE OPERATING STATE OF A SWITCH DEVICE
DISPOSITIF D'AFFICHAGE DOTÉ D'UNE INTERFACE SANS FIL POUR VISUALISER L'ÉTAT DE FONCTIONNEMENT D'UN DISPOSITIF DE COUPURE

(30) Priorität: 02.04.2014 DE 102014104658
(43) Veröffentlichungstag der Anmeldung: 08.02.2017
(73) Patentinhaber: Eaton Intelligent Power Limited, Dublin 4 (IE)
(72) Erfinder: REIDT, Georg, 53913 Swisstal (DE)
(74) Vertreter: Eaton IP Group EMEA
(86) Internationale Anmeldenummer: PCT/EP2015/053835
(87) Internationale Veröffentlichungsnummer: WO 2015/149996

(56) Entgegenhaltungen:
- DE-A1-102012 106 923
- US-A1- 2012 099 566
- US-A1- 2013 318 249
- US-A1- 2013 324 035

## Beschreibung

Die Erfindung betrifft eine mit einer drahtlosen Schnittstelle ausgestattete Anzeigevorrichtung für den Betriebszustand einer Schaltvorrichtung.

Aus der deutschen Offenlegungsschrift DE 10 2012 106 923 A1 ist eine Schaltvorrichtung mit Funkmodul und Deaktivierungsfunktion bekannt. Über das Funkmodul kann eine Information über den Betriebszustand der Schaltvorrichtung drahtlos abrufbar zur Verfügung gestellt werden. Am Funkmodul kann ein Anzeigeelement in Form einer sogenannten Multicolor-LED vorgesehen sein, deren Farbdarstellung in Abhängigkeit von einem Betriebsparameter des Schaltgeräts erfolgen kann.

Ein solches System ist zum Beispiel offenbart im Dokument US 2013/324035 A1.

Aufgabe der vorliegenden Erfindung ist es nun, eine verbesserte, mit einer drahtlosen Schnittstelle ausgestattete Anzeigevorrichtung für den Betriebszustand einer Schaltvorrichtung vorzustellen.

Diese Aufgabe wird durch die Gegenstände der unabhängigen Ansprüche gelöst. Weitere Ausgestaltungen der Erfindung sind Gegenstand der abhängigen Ansprüche.

Ein der vorliegenden Erfindung zugrunde liegender Gedanke besteht darin, eine mit einer drahtlosen Schnittstelle ausgestattete Anzeigevorrichtung für den Betriebszustand einer Schaltvorrichtung durch eine Anmelde- und Abmeldeprozedur für die drahtlose Verbindung mit einem externen Gerät derart zu konfigurieren, dass eine genaue Abfolge des Anmeldens und Abmeldens des externen Geräts festgelegt ist und dadurch Fehler bei der Verbindung des externen Geräts mit mehreren derartiger Anzeigevorrichtungen vermieden werden können. Außerdem ist durch die Erfindung gewährleistet, dass die drahtlose Schnittstelle nicht ständig aktiviert ist, was in bestimmten Betriebsumgebungen unerwünscht sein kann, sondern nur bei Eintreten eines bestimmten Ereignisses wie beispielsweise einem kritischen Betriebszustand der verbundenen Schaltvorrichtung aktiviert und automatisch nach Abschluss einer Datenübertragung über die drahtlose Schnittstelle wieder deaktiviert wird.

Eine Ausführungsform der Erfindung betrifft nun eine Anzeigevorrichtung mit einer drahtlosen Schnittstelle, über die eine Kommunikation zwischen der Anzeigevorrichtung und einem zur Kommunikation mit der Anzeigevorrichtung konfigurierten Gerät ermöglicht wird, einem Mehrfarben-Anzeigeelement zum Anzeigen des Betriebszustands einer mit der Anzeigevorrichtung verbundenen Schaltvorrichtung, und einem Kontroller, der zum Steuern des Mehrfarben-Anzeigeelements und der Kommunikation über die drahtlose Schnittstelle konfiguriert ist und weiterhin konfiguriert ist, bei Eintreten eines vorgegebenen Ereignisses die drahtlose Schnittstelle zu aktivieren und einen Anmeldeprozess zum Verbinden der Anzeigevorrichtung mit dem Gerät über die drahtlose Schnittstelle zu initiieren, eine Datenübertragung zum verbundenen Gerät über die drahtlose Schnittstelle auszuführen und nach Abschluss der Datenübertragung einen Abmeldeprozess zum Unterbrechen der Verbindung zwischen der Anzeigevorrichtung und dem verbundenen Gerät zu initiieren.

Der Kontroller kann konfiguriert sein, als vorgegebenes Ereignis die Betätigung einer Taste und/oder das Eintreten eines bestimmten Betriebszustands der mit der Anzeigevorrichtung verbundenen Schaltvorrichtung zu detektieren.

Der Kontroller kann weiterhin konfiguriert sein, als Abschluss der Datenübertragung einen Bestätigungsbefehl vom verbundenen Gerät zu detektieren.

Außerdem kann der Kontroller konfiguriert sein, nach dem Unterbrechen der Verbindung zwischen der Anzeigevorrichtung und dem verbundenen Gerät das Mehrfarben-Anzeigeelement zum Anzeigen eines vorgegebenen Betriebszustands der mit der Anzeigevorrichtung verbundenen Schaltvorrichtung anzusteuern.

Schließlich kann der Kontroller konfiguriert sein, Wartungsmitteilungen und/oder Betriebsparameter der mit der Anzeigevorrichtung verbundenen Schaltvorrichtung als Daten an das verbundene Gerät zu übertragen.

Die Anzeigevorrichtung kann ein manuelles Betätigungselement aufweisen, das mit dem Kontroller verbunden und insbesondere mechanisch verriegelbar ist, und die drahtlose Schnittstelle kann ein Funkmodul sein, das in das Betätigungselement zusammen mit dem Mehrfarben-Anzeigeelement integriert ist. Das Funkmodul kann konfiguriert sein, Daten gemäß einem Standard wie IEEE 802.15.1 (Bluetooth®, insbesondere Bluetooth® Low Energy), IEEE 802.11 (Wireless Local Area Network - WLAN), ISO 14443, 18092, 21481 ECMA 340, 352, 356, 362, ETSI TS 102 190 (Near Field Communication - NFC) zu übertragen. Das manuelle Betätigungselement kann beispielsweise derart ausgestaltet sein, dass es mechanisch durch ein Schloß verriegelt werden kann, um eine unautorisierte Betätigung zu verhindern.

Eine weitere Ausführungsform der Erfindung betrifft ein Kommunikationsgerät mit einer drahtlosen Schnittstelle, das einen Prozessor aufweist, der programmtechnisch derart konfiguriert ist, dass das Kommunikationsgerät über die drahtlose Schnittstelle mit einer Anzeigevorrichtung nach einem der vorangehenden Ansprüche kommunizieren und Daten von der Anzeigevorrichtung per Datenübertragung empfangen und auf einem Bildschirm anzeigen kann und insbesondere einen Bestätigungsbefehl zum Abschließen der Datenübertragung erzeugen und an die Anzeigevorrichtung übermitteln kann. Das Kommunikationsgerät kann insbesondere ein tragbarer Computer, ein Tablet-PC, ein Mobiltelefon, ein Smartphone, ein PDA (Personal Digital Assistant) oder eine Datenbrille sein.

Eine weitere Ausführungsform der Erfindung betrifft ein Verfahren zum Steuern einer Verbindung einer Anzeigevorrichtung nach der Erfindung und wie hierin beschrieben mit einem Kommunikationsgerät nach der Erfindung und wie hierin beschrieben, mit den folgenden Schritten: Detektieren eines vorgegebenen Ereignisses, Aktivieren der drahtlosen Schnittstelle der Anzeigevorrichtung abhängig von der Detektion des vorgegebenen Ereignisses, Initiieren eines Anmeldeprozesses zum Verbinden der Anzeigevorrichtung mit dem Kommunikationsgerät über die drahtlose Schnittstelle, Übertragen von Daten zum verbundenen Kommunikationsgerät über die drahtlose Schnittstelle, Detektieren des Abschlusses der Datenübertragung, und Initiieren eines Abmeldeprozesses zum Unterbrechen der Verbindung zwischen der Anzeigevorrichtung und dem verbundenen Gerät.

Der Schritt des Detektierens eines vorgegebenen Ereignisses kann das Detektieren des Betätigens einer Taste und/oder das Detektieren des Eintretens eines bestimmten Betriebszustands einer mit der Anzeigevorrichtung verbundenen Schaltvorrichtung umfassen, und/oder der Schritt des Detektierens des Abschlusses der Datenübertragung kann das Empfangen eines Bestätigungsbefehls vom verbundenen Kommunikationsgerät umfassen, und/oder das Verfahren kann als weiteren Schritt das Ansteuern des Mehrfarben-Anzeigeelements zum Anzeigen eines vorgegebenen Betriebszustands einer mit der Anzeigevorrichtung verbundenen Schaltvorrichtung nach dem Unterbrechen der Verbindung zwischen der Anzeigevorrichtung und dem verbundenen Gerät aufweisen.

Das Verfahren kann als Teil einer Firmware der Anzeigevorrichtung implementiert sein, die vom Kontroller zum Betreiben der Anzeigevorrichtung ausgeführt wird.

Die Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in
Fig. 1 ein Blockschaltbild eines Ausführungsbeispiels einer mit einer drahtlosen Schnittstelle ausgestatteten Anzeigevorrichtung für den Betriebszustand einer Schaltvorrichtung nach der Erfindung; und
Fig. 2 ein Ablaufdiagramm eines Ausführungsbeispiels eines Verfahren zum Steuern einer Verbindung einer Anzeigevorrichtung mit einem Kommunikationsgerät nach der Erfindung.

In der folgenden Beschreibung können gleiche, funktional gleiche und funktional zusammenhängende Elemente mit den gleichen Bezugszeichen versehen sein. Absolute Werte sind im Folgenden nur beispielhaft angegeben und sind nicht als die Erfindung einschränkend zu verstehen.

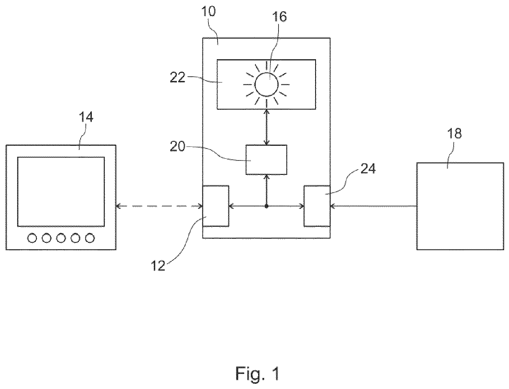

Fig. 1 zeigt eine erfindungsgemäße Anzeigevorrichtung 10, die über eine Schnittstelle 24 mit einem Leistungsschalter, einem Motor-Starter, einem Motorschutzschalter oder dergleichen Schaltvorrichtung 18 über eine drahtgebundene oder drahtlose Verbindung verbunden ist, um Daten von der Schaltvorrichtung 18 zu empfangen, insbesondere Daten über den Betriebszustand der Schaltvorrichtung 18. Über die Schnittstelle 24 empfangene Daten von der Schaltvorrichtung 18 werden von einem Kontroller 20 der Anzeigevorrichtung verarbeitet, der durch eine in einem Speicher des Kontrollers 20 angelegten Firmware entsprechend konfiguriert ist.

Die Anzeigevorrichtung 10 weist ferner einen Multi-Color-Indicator (MCI) in Form einer mehrfarbigen Leuchtdiode 16 auf, die vom Kontroller 20 angesteuert wird. Die mehrfarbige Leuchtdiode 16 ist in eine Taste 22 integriert, die ebenfalls mit dem Kontroller 20 verbunden ist, der dadurch Betätigungen der Taste 22 detektieren kann. Die Taste 22 kann durch einen (nicht dargestellten) Mechanismus so gesperrt werden, dass sie nicht mehr betätigt werden kann. Dadurch kann eine unbefugte oder auch unbeabsichtigte Betätigung verhindert werden. Die Anzeigevorrichtung 10 kann beispielsweise wie ein Befehls- und Meldegerät aus der RMQ-Titan®-Serie der Anmelderin ausgebildet sein und eine beleuchtete Drucktaste aufweisen, welche die Taste 22 und die mehrfarbige Leuchtdiode 16 implementiert. Alternativ kann die Anzeigevorrichtung 10 als Knebelschalter ausgebildet sein, in den beispielsweise eine mehrfarbige Leuchtdiode integriert ist. Der Knebelschalter kann verschiedene Positionen aufweisen, um verschiedene Funktionen der Anzeigevorrichtung 10 zu aktivieren, wie nachfolgend noch erläutert wird. Hierin wird also unter einer Taste nicht nur ein einfacher Druckschalter mit zwei Schaltzuständen verstanden, sondern auch komplexere Schaltelemente mit mehreren Schaltzuständen wie Dreh- oder Knebelschalter mit verschiedenen zwei, drei oder mehr Schaltzuständen.

Als weitere Kommunikationsschnittstelle weist die Anzeigevorrichtung 10 ein Funkmodul 12 auf. Anstelle eines Funkmoduls kann auch ein anderes drahtloses Kommunikationsmodul eingesetzt werden, beispielsweise ein Infrarot-Kommunikationsmodul. Das Funkmodul 12 kann zur Datenkommunikation gemäß verschiedener Funkübertragungsstandards eingerichtet sein, wie beispielsweise IEEE 802.15.1 (Bluetooth®, insbesondere Bluetooth® Low Energy), IEEE 802.11 (Wireless Local Area Network - WLAN), ISO 14443, 18092, 21481 ECMA 340, 352, 356, 362, ETSI TS 102 190 (Near Field Communication - NFC). Selbstverständlich sind auch andere Funkübertragungsstandards möglich, insbesondere Hersteller-eigene oder Mobilfunk-Standards.

Die Anzeigevorrichtung 10 kann beispielsweise in der Tür eines (nicht dargestellten) Schaltschranks derart montiert sein, dass die mehrfarbige Leuchtdiode 16 mit ihrer Farbanzeige gut erkennbar wichtige und binäre Informationen über den Betriebszustand der Schaltvorrichtung 18 signalisieren kann. Komplexere Informationen wie Messwerte der Schaltvorrichtung können von der Anzeigevorrichtung 10 über das Funkmodul 12 per Datenkommunikation an ein weiteres Gerät wie einen Tablet-PC 14 übertragen werden, der ebenfalls ein Funkmodul aufweist und über eine Funkverbindung, beispielsweise eine Bluetooth®-Kopplung mit der Anzeigevorrichtung 10 datenkommunikationsmäßig verbunden werden kann.

Im Folgenden wird als Kommunikationspartner der Anzeigevorrichtung 10 der Tablet-PC 14 genannt, obwohl selbstverständlich auch die eingangs bereits erwähnten weiteren Geräte als Kommunikationspartner sowie prinzipiell jedes Datenverarbeitungsgerät mit Funkmodul verwendet werden können.

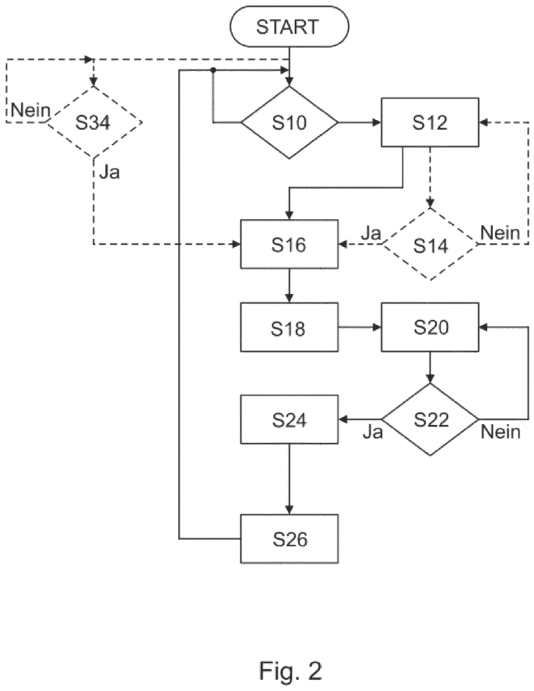

Nachfolgend wird nun und Bezug auf das in Fig. 2 gezeigte Ablaufdiagramm erläutert, wie eine Kommunikationsverbindung zur Datenübertragung zwischen der Anzeigevorrichtung 10 und dem Tablet-PC 14 auf- und wieder abgebaut wird.

Die Firmware konfiguriert den Kontroller 20 derart, dass er folgende Ereignisse detektieren kann: ein Betätigen der Taste 22 und bestimmte, insbesondere kritische Betriebszustände der Schaltvorrichtung 18, die er über die Schnittstelle 24 empfängt.

In einem ersten Schritt S10 versetzt die Firmware den Kontroller 20 daher in einen Zustand, in dem er auf über die Schnittstelle 24 von der Schaltvorrichtung 18 signalisierte, vor allem kritische Betriebszustände wartet. Sobald der Kontroller im Schritt S10 feststellt, dass ein bestimmter Betriebszustand über die Schnittstelle 24 von der Schaltvorrichtung 18 empfangen wurde, fährt er mit Schritt S12 fort, in dem er die mehrfarbige Leuchtdiode 16 so ansteuert, dass der erkannte und von der Schaltvorrichtung 18 signalisierte Betriebszustand optisch entsprechend angezeigt wird, beispielsweise im Fall eines kritischen Betriebszustands der Schaltvorrichtung 18 durch eine rot oder gelb blinkende Leuchtdiode 16.

Der Kontroller 20 kann daraufhin entweder direkt mit dem Schritt S16 fortfahren, in dem er das Funkmodul 12 aktiviert, oder der Kontroller 20 kann erst in einem Schritt S14 prüfen, ob die Taste 22 betätigt wurde, bevor er mit Schritt S16 fortfährt und das Funkmodul 12 aktiviert. Der Schritt S16 kann auch über den links im Ablaufdiagramm dargestellten Zweig über den Schritt S34 direkt erreicht werden. Der Schritt S34 wird hierzu parallel zum Schritt S10 vom Kontroller 20 ausgeführt und ermöglicht eine direkte Aktivierung des Funkmoduls 12 durch eine Betätigung der Taste 22 auch ohne Vorliegen eines bestimmten Betriebszustands der Schaltvorrichtung 18, beispielsweise für eine Diagnose der Schaltvorrichtung 18 über den Tablet-PC 14. Wird als Taste 22 beispielsweise ein Knebel- oder Drehschalter mit drei Schaltzuständen, d.h. drei Schaltpositionen eingesetzt, kann im Schritt S14 geprüft werden, ob der Drehschalter eine erste, beispielsweise nach rechts gedrehte Schaltposition aufweist, und im Schritt S16 kann geprüft werden, ob der Drehschalter eine zweite, beispielsweise nach links gedrehte Schaltposition aufweist. In einer dritten Mittelstellung des Drehschalters kann die Anzeigevorrichtung 10 beispielsweise deaktiviert oder gesperrt sein, so dass in dieser Schaltposition keine Aktivierung des Funkmoduls 12 möglich ist.

Nach Aktivierung des Funkmoduls 12 im Schritt S16, initiiert der Kontroller 20 einen Anmeldeprozess, damit sich ein externes Gerät wie der Tablet-PC 14 mit der Anzeigevorrichtung 10 per Funk verbinden kann. Dieser Anmeldeprozess kann das Schalten des Funkmoduls 12 in einen Zustand aufweisen, in dem es Verbindungsanforderungen von externen Geräten wie dem Tablet-PC 14 akzeptiert, ggf. nach Eingabe eines vorgegebenen Kodes am externen Gerät 14.

Wenn der Anmeldeprozess abgeschlossen ist und eine Funkschnittstelle des Tablet-PC 14 ein Funkverbindung mit dem Funkmodul 12 etabliert hat, steuert der Kontroller 20 die Übertragung von Daten, die er von der Schaltvorrichtung 18 über die Schnittstelle 24 empfangen hat, an den Tablet-PC 14 und umgekehrt. Bei den Daten kann es sich insbesondere um Diagnose- und Messdaten handeln, die über die mehrfarbige Leuchtdiode 16 nicht angezeigt werden können. Weiterhin können die Daten auch Wartungsbefehle umfassen, die von Bedienpersonal über ein entsprechendes Programm am Tablet-PC 14 eingegeben und an die Anzeigevorrichtung 10 übertragen werden, um beispielsweise den Betriebszustand der Schaltvorrichtung 18 zu ändern, insbesondere in einen unkritischen Zustand zu bringen. Die Wartungsbefehle können beispielsweise Befehle zum Setzen und/oder Ändern von Betriebsparametern der Schaltvorrichtung 18 aufweisen.

Der Kontroller 20 detektiert in einem weiteren Schritt S22 den Abschluss der Datenübertragung. Als Abschluss der Datenübertragung kann der Kontroller 20 insbesondere einen vom Tablet-PC 14 empfangen Bestätigungsbefehl über die empfangenen Daten erkennen. Selbstverständlich sind auch andere Abschlusskriterien möglich: beispielsweise eine Betätigung der Taste 22 (bei einem manuelle Abbruch), oder wenn der Kontroller 20 erkennt, dass keine Daten mehr für eine Übertragung vorhanden sind.

Sobald der Abschluss erkannt wurde, fährt der Kontroller 20 mit Schritt S24 fort, in dem er einen Abmeldeprozess zum Unterbrechen der Funkverbindung zwischen dem Funkmodul 12 und der Funkschnittstelle des Tablet-PC 14 initiiert. Im einfachsten Fall kann der Kontroller 20 beispielsweise einfach das Funkmodul 12 deaktivieren, so dass die Funkverbindung zwischen dem Tablet-PC 14 und dem Funkmodul 12 abbricht. Alternativ kann der Kontroller 20 über die Funkverbindung einen expliziten Befehl an den Tablet-PC 14 übertragen, so dass dieser sich abmeldet.

Ist der Abmeldeprozess abgeschlossen, steuert der Kontroller 20 im Schritt S26 die mehrfarbige Leuchtdiode 16 so an, dass - falls der Betriebszustand der Schaltvorrichtung 18 durch entsprechende, vom Tablet-PC 14 empfangene Befehle geändert wurde - der aktualisierte Betriebszustand der Schaltvorrichtung 18 optisch signalisiert wird. Wenn beispielsweise der kritische Betriebszustand der Schaltvorrichtung 18 behoben wurde, kann der Kontroller 20 die mehrfarbige Leuchtdiode 16 so ansteuern, dass diese kontinuierlich grün leuchtet.

Durch die vorliegende Erfindung wird eine zur Signalisierung von Betriebszuständen von anderen Geräten vorgesehene Anzeigevorrichtung derart weitergebildet, dass die beschränkten Signalisierungsmöglichkeiten einer bisher durch eine mehrfarbige Leuchtdiode implementierte MCI erweitert werden, indem ein zur Kommunikation mit der Anzeigevorrichtung konfiguriertes Gerät wie ein mobiler Computer zur Anzeige von weiteren Informationen eingesetzt werden kann. Um eine möglichst effiziente Verbindung zwischen der Anzeigevorrichtung und einem externen Gerät über eine drahtlose Verbindung zu ermöglichen, ist eine genau definierte Anmelde- und Abmeldeprozedur des externen Geräts vorgegeben, die vor allem Fehler bei der Verbindung des externen Geräts mit mehreren solcher Anzeigevorrichtungen zu vermeiden hilft. Außerdem wird durch die Erfindung vermieden, dass eine drahtlose Schnittstelle der Anzeigevorrichtung ständig aktiviert ist, was in bestimmten Umgebungen nicht erwünscht ist.

### Bezugszeichen

- 10: MCI
- 12: Funkmodul
- 14: Tablet-PC
- 16: mehrfarbige Leuchtdiode
- 18: Leistungsschalter/Motor-Starter/Motorschutzschalter
- 20: Kontroller
- 22: Taste
- 24: Schnittstelle zum Leistungsschalter/Motor-Starter/Motorschutzschalter 18

## Patentansprüche

1. Anzeigevorrichtung (10) mit
einer drahtlosen Schnittstelle (12), über die eine Kommunikation zwischen der Anzeigevorrichtung und einem zur Kommunikation mit der Anzeigevorrichtung konfigurierten Gerät (14) ermöglicht wird,
einem Mehrfarben-Anzeigeelement (16) zum Anzeigen des Betriebszustands einer mit der Anzeigevorrichtung verbundenen Schaltvorrichtung (18), und
einem Kontroller (20), der zum Steuern des Mehrfarben-Anzeigeelements und der Kommunikation über die drahtlose Schnittstelle konfiguriert ist und weiterhin konfiguriert ist, bei Eintreten eines vorgegebenen Ereignisses die drahtlose Schnittstelle zu aktivieren und einen Anmeldeprozess zum Verbinden der Anzeigevorrichtung mit dem Gerät über die drahtlose Schnittstelle zu initiieren, eine Datenübertragung zum verbundenen Gerät über die drahtlose Schnittstelle auszuführen und nach Abschluss der Datenübertragung einen Abmeldeprozess zum Unterbrechen der Verbindung zwischen der Anzeigevorrichtung und dem verbundenen Gerät zu initiieren.

2. Anzeigevorrichtung nach Anspruch 1, **dadurch gekennzeichnet, dass** der Kontroller (20) konfiguriert ist, als vorgegebenes Ereignis die Betätigung einer Taste (22) und/oder das Eintreten eines bestimmten Betriebszustands der mit der Anzeigevorrichtung verbundenen Schaltvorrichtung (18) zu detektieren.

3. Anzeigevorrichtung nach Anspruch 1 oder 2, **dadurch gekennzeichnet, dass** der Kontroller (20) konfiguriert ist, als Abschluss der Datenübertragung einen Bestätigungsbefehl vom verbundenen Gerät (14) zu detektieren.

4. Anzeigevorrichtung nach Anspruch 1, 2 oder 3, **dadurch gekennzeichnet, dass** der Kontroller (20) konfiguriert ist, nach dem Unterbrechen der Verbindung zwischen der Anzeigevorrichtung (10) und dem verbundenen Gerät (14) das Mehrfarben-Anzeigeelement (16) zum Anzeigen eines vorgegebenen Betriebszustands der mit der Anzeigevorrichtung verbundenen Schaltvorrichtung (18) anzusteuern.

5. Anzeigevorrichtung nach Anspruch 1, 2 oder 3, **dadurch gekennzeichnet, dass** der Kontroller (20) konfiguriert ist, Wartungsmitteilungen und/oder Betriebsparameter der mit der Anzeigevorrichtung verbundenen Schaltvorrichtung (18) als Daten an das verbundene Gerät (14) zu übertragen.

6. Anzeigevorrichtung nach Anspruch 4, **dadurch gekennzeichnet, dass** sie ein manuelles Betätigungselement (22) aufweist, das mit dem Kontroller (20) verbunden und insbesondere mechanisch verriegelbar ist, und die drahtlose Schnittstelle ein Funkmodul (12) ist, das in das Betätigungselement (22) zusammen mit dem Mehrfarben-Anzeigeelement (16) integriert ist.

7. Kommunikationsgerät (14) mit einer drahtlosen Schnittstelle, das einen Prozessor aufweist, der programmtechnisch derart konfiguriert ist, dass das Kommunikationsgerät über die drahtlose Schnittstelle mit einer Anzeigevorrichtung (10) nach einem der vorangehenden Ansprüche kommunizieren und Daten von der Anzeigevorrichtung (10) per Datenübertragung empfangen und auf einem Bildschirm anzeigen kann und einen Bestätigungsbefehl zum Abschließen der Datenübertragung erzeugen und an die Anzeigevorrichtung (10) übermitteln kann.

8. Verfahren zum Steuern einer Verbindung einer Anzeigevorrichtung (10) nach einem der Ansprüche 1 bis 6 mit einem Kommunikationsgerät (14) nach Anspruch 7, mit den folgenden Schritten:
- Detektieren eines vorgegebenen Ereignisses (S10, S14),
- Aktivieren (S16) der drahtlosen Schnittstelle (12) der Anzeigevorrichtung (10) abhängig von der Detektion des vorgegebenen Ereignisses,
- Initiieren (S18) eines Anmeldeprozesses zum Verbinden der Anzeigevorrichtung (10) mit dem Kommunikationsgerät (14) über die drahtlose Schnittstelle (12),
- Übertragen (S20) von Daten zum verbundenen Kommunikationsgerät (14) über die drahtlose Schnittstelle (12),
- Detektieren (S22) des Abschlusses der Datenübertragung, und
- Initiieren (S24) eines Abmeldeprozesses zum Unterbrechen der Verbindung zwischen der Anzeigevorrichtung (10) und dem verbundenen Gerät (14).

9. Verfahren nach Anspruch 8, **dadurch gekennzeichnet, dass** der Schritt des Detektierens eines vorgegebenen Ereignisses das Detektieren (S12) des Betätigens einer Taste (22) und/oder das Detektieren (S10) des Eintretens eines bestimmten Betriebszustands einer mit der Anzeigevorrichtung (10) verbundenen Schaltvorrichtung (18) umfasst, und/oder
der Schritt des Detektierens (S22) des Abschlusses der Datenübertragung das Empfangen eines Bestätigungsbefehls vom verbundenen Kommunikationsgerät (14) umfasst, und/oder
das Verfahren als weiteren Schritt das Ansteuern (S26) des Mehrfarben-Anzeigeelements (16) zum Anzeigen eines vorgegebenen Betriebszustands einer mit der Anzeigevorrichtung verbundenen Schaltvorrichtung (18) nach dem Unterbrechen der Verbindung zwischen der Anzeigevorrichtung (10) und dem verbundenen Gerät (14) aufweist.

10. Verfahren nach Anspruch 8 oder 9, **dadurch gekennzeichnet, dass** es als Teil einer Firmware der Anzeigevorrichtung (10) implementiert ist, die vom Kontroller (20) zum Betreiben der Anzeigevorrichtung (10) ausgeführt wird.

## Claims

1. Display device (10) having
a wireless interface (12) via which a communication between the display device and a device (14) configured for the communication with the display device is facilitated,
a multicolour display element (16) for displaying the operating state of a switch device (18) connected with the display device, and
a controller (20) which is configured for controlling the multicolour display element and the communication via the wireless interface, and is furthermore configured, at the occurrence of a pre-determined event, to activate the wireless interface and to initiate a login process for connecting the display device with the device via the wireless interface, to carry out a data transmission to the connected device via the wireless interface and after the completion of the data transmission to initiate a logout process for interrupting the connection between the display device and the connected device.

2. Display device according to claim 1, **characterised in that** the controller (20) is configured to detect as pre-determined event the actuation of a button (22) and/or the occurrence of a specified operating state of the switch device (18) connected with the display device.

3. Display device according to claim 1 or 2, **characterised in that** the controller (20) is configured, to detect, as a conclusion of the data transmission, a confirmation command from the connected device (14).

4. Display device according to claim 1, 2 or 3, **characterised in that** the controller (20) is configured, after the interruption of the connection between the display device (10) and the connected device (14), to actuate the multicolour display element (16) to display a pre-determined operating state of the switch device (18) connected with the display device.

5. Display device according to claim 1, 2 or 3, **characterised in that** the controller (20) is configured to transmit as data to the connected device (14) service messages and/or operational parameters of the switch device (18) connected with the display device.

6. Display device according to claim 4, **characterised in that** it has a manual actuating element (22) which is connected with the controller (20) and is in particular mechanically lockable, and the wireless interface is a radio module (12) which is integrated into the actuating element (22) together with the multicolour display element (16).

7. Communication device (14) having a wireless interface, which communication device has a processor which is programmatically configured such that the communication device can communicate via the wireless interface with a display device (10) according to any of the preceding claims and can receive data from the display device (10) via data transmission and display them on a screen and can generate a confirmation command for completing the data transmission and transmit it to the display device (10).

8. Method for controlling a connection of a display device (10) according to any of claims 1 to 6 with a communication device (14) according to claim 7, having the following steps:
- detecting a pre-determined event (S10, S14),
- activating (S16) the wireless interface (12) of the display device (10) depending on the detection of the pre-determined event,
- initiating (S18) a login process for connecting the display device (10) with the communication device (14) via the wireless interface (12),
- transmitting (S20) data to the connected communication device (14) via the wireless interface (12),
- detecting (S22) the conclusion of the data transmission, and
- initiating (S24) a logout process for interrupting the connection between the display device (10) and the connected device (14).

9. Method according to claim 8, **characterised in that** the step of detecting a pre-determined event comprises the detecting (S12) of the actuation of a button (22) and/or the detecting (S10) of the occurrence of a specified operating state of a switch device (18) connected with the display device (10), and/or
the step of the detecting (S22) of the conclusion of the data transmission comprises the receiving of a confirmation command from the connected communication device (14), and/or
the process has as a further step the actuating (S26) of the multicolour display element (16) for displaying a pre-determined operating state of a switch device (18) connected with the display device after the interruption of the connection between the display device (10) and the connected device (14).

10. Method according to claim 8 or 9, **characterised in that** it is implemented as a part of a firmware of the display device (10) which is run by the controller (20) for operating the display device (10).

## Revendications

1. Dispositif d'affichage (10) avec
une interface sans fil (12), par le biais de laquelle une communication entre le dispositif d'affichage et un appareil (14) configuré pour la communication avec le dispositif d'affichage devient possible,
un élément d'affichage multicolore (16) pour l'affichage de l'état de fonctionnement d'un dispositif de commutation (18) relié au dispositif d'affichage, et
un contrôleur (20), qui est configuré pour la commande de l'élément d'affichage multicolore et la communication par le biais de l'interface sans fil et est configuré en outre, pour activer l'interface sans fil lors de la survenue d'un événement prédéfini, et initier un processus de connexion pour la liaison du dispositif d'affichage à l'appareil par le biais de l'interface sans fil, effectuer un transfert de données vers l'appareil relié par le biais de l'interface sans fil et, après la fin du transfert de données, initier un processus de déconnexion pour l'interruption de la liaison entre le dispositif d'affichage et l'appareil relié.

2. Dispositif d'affichage selon la revendication 1, **caractérisé en ce que** le contrôleur (20) est configuré pour détecter en tant qu'événement prédéfini l'actionnement d'une touche (22) et/ou la survenue d'un état de fonctionnement déterminé du dispositif de commutation (18) relié au dispositif d'affichage.

3. Dispositif d'affichage selon la revendication 1 ou 2, **caractérisé en ce que** le contrôleur (20) est configuré pour détecter en tant que fin du transfert de données un ordre de confirmation en provenance de l'appareil relié (14).

4. Dispositif d'affichage selon la revendication 1, 2 ou 3, **caractérisé en ce que** le contrôleur (20) est configuré pour commander, après l'interruption de la liaison entre le dispositif d'affichage (10) et l'appareil relié (14), l'élément d'affichage multicolore (16) pour l'affichage d'un état de fonctionnement prédéfini du dispositif de commutation (18) relié au dispositif d'affichage.

5. Dispositif d'affichage selon la revendication 1, 2 ou 3, **caractérisé en ce que** le contrôleur (20) est configuré pour transmettre des notifications de maintenance et/ou des paramètres de fonctionnement du dispositif de commutation (18) relié au dispositif d'affichage en tant que données à l'appareil relié (14).

6. Dispositif d'affichage selon la revendication 4, **caractérisé en ce qu'**il présente un élément d'actionnement manuel (22), qui est relié au contrôleur (20) et en particulier mécaniquement verrouillable, et l'interface sans fil est un module radio (12), qui est intégré dans l'élément d'actionnement (22) conjointement avec l'élément d'affichage multicolore (16).

7. Appareil de communication (14) avec une interface sans fil, qui présente un processeur, qui est configuré par programmation de sorte que l'appareil de communication peut communiquer avec un dispositif d'affichage (10) selon l'une quelconque des revendications précédentes par le biais de l'interface sans fil et recevoir des données du dispositif d'affichage (10) par transfert de données et les afficher sur un écran et générer un ordre de confirmation pour terminer le transfert de données et le transmette au dispositif d'affichage (10).

8. Procédé de commande d'une liaison d'un dispositif d'affichage (10) selon l'une quelconque des revendications 1 à 6 à un appareil de communication (14) selon la revendication 7, avec les étapes suivantes :
- détection d'un événement prédéfini (S10, S14),
- activation (S16) de l'interface sans fil (12) du dispositif d'affichage (10) en fonction de la détection de l'événement prédéfini,
- initiation (S18) d'un processus de connexion pour la liaison du dispositif d'affichage (10) à l'appareil de communication (14) par le biais de l'interface sans fil (12),
- transfert (S20) de données à l'appareil de communication relié (14) par le biais de l'interface sans fil (12),
- détection (S22) de la fin du transfert de données, et
- initiation (S24) d'un processus de déconnexion pour l'interruption de la liaison entre le dispositif d'affichage (10) et l'appareil relié (14).

9. Procédé selon la revendication 8, **caractérisé en ce que** l'étape de détection d'un événement prédéfini comprend la détection (S12) de l'actionnement d'une touche (22) et/ou la détection (S10) de la survenue d'un état de fonctionnement déterminé d'un dispositif de commutation (18) relié au dispositif d'affichage (10), et/ou
l'étape de détection (S22) de la fin du transfert de données comprend la réception d'un ordre de confirmation en provenance de l'appareil de communication relié (14), et/ou
le procédé présente en tant qu'autre étape la commande (S26) de l'élément d'affichage multicolore (16) pour l'affichage d'un état de fonctionnement prédéfini d'un dispositif de commutation (18) relié au dispositif d'affichage après l'interruption de la liaison entre le dispositif d'affichage (10) et l'appareil relié (14).

10. Procédé selon la revendication 8 ou 9, **caractérisé en ce qu'**il est implémenté en tant que partie d'un micrologiciel du dispositif d'affichage (10), qui est effectué par le contrôleur (20) pour le fonctionnement du dispositif d'affichage (10).
